# DEMANDE DE BREVET EUROPEEN

(11) **EP 1 063 847 A1**
(43) Date de publication de la demande: **27.12.2000**
(21) Numéro de dépôt: 00401783.6
(22) Date de dépôt: 22.06.2000
(51) Int. Cl.: H04N 7/088

(54) **Système de présentation d'informations**

(30) Priorité: 22.06.1999 FR 9907941
(71) Demandeur: SAGEM S.A., 75116 Paris (FR)
(72) Inventeur: Manac'h, Stéphane, 78150 Triel sur Seine (FR); Nicaise, Pierre, 60580 Coye La Foret (FR)
(74) Mandataire: Bloch, Gérard

(57) **Abrégé**

Le système de présentation d'informations comporte des circuits (1) de réception d'un flux d'informations et des circuits (3, 4,) de présentation de ces informations et il comporte, reliant les circuits de réception (1) aux circuits de présentation (3, 4, 74), des circuits (2) de sélection d'informations comparant des données de contexte liées aux informations reçues à des données de contexte local et transmettant, aux circuits de présentation (3, 4), des informations dont les données de contexte présentent le plus faible écart avec les données de contexte local.

L'invention s'applique aux panneaux d'affichage de mobilier urbain.

## Description

La présente invention concerne un système de fourniture d'informations telles que publicités sur des panneaux d'affichage de mobilier urbain ou programmes de télévision par exemple.

Si l'on prend l'exemple des panneaux d'affichage de mobilier urbain, les informations affichées, provenant d'un centre de gestion qui les diffuse, sont reçues par un récepteur commandant l'afficheur de panneau. Une même information est transmise à tous les panneaux, pendant une durée prédéterminée.

Dans le centre de gestion, les informations à afficher sont sélectionnées en fonction de leur actualité, pour informer le public d'un événement ou pour, selon la saison, afficher des images de publicité pour des produits de saison, tels qu'une boisson rafraîchissante ou un produit de bonzage en été. Cependant, une telle sélection d'informations manque de souplesse et les informations affichées peuvent perdre toute pertinence en dehors du contexte pour lequel elles sont prévues.

Dans un autre exemple, un téléspectateur sélectionne un programme par consultation d'un magazine TV ou par recherche d'un programme qui lui convient, en émettant des télécommandes successives pour visualiser rapidement les programmes diffusés par les diverses chaînes- et sélectionner l'un d'entre eux.

Cette recherche est fastidieuse et, en outre, pas toujours efficace puisqu'une publicité insérée dans un programme risque de masquer temporairement le contenu de ce programme.

La présente invention vise à éviter ce genre d'inconvénients.

A cet effet, l'invention concerne un système de présentation d'informations, comportant des moyens de réception d'un flux d'informations et des moyens de présentation de ces informations, caractérisé par le fait qu'il comporte, reliant les moyens de réception aux moyens de présentation, des moyens de sélection d'informations agencés pour comparer des données de contexte liées aux informations reçues à des données de contexte local et pour transmettre, aux moyens de présentation, des informations dont les données de contexte présentent le plus faible écart avec les données de contexte local.

Ainsi ce sont les informations les plus pertinentes, c'est-à-dire celles dont les données de contexte sont les plus proches des données de contexte local, qui sont présentées. A cet égard, le système est donc évolutif, avec les données de contexte local, et s'adapte à ce contexte.

Avantageusement, les moyens de sélection sont agencés pour calculer régulièrement les écarts de pertinence entre les données des informations reçues et les données évolutives de contexte local, ne considérer que les écarts minimaux et présenter des informations correspondantes.

En d'autres termes, le système est adaptatif et actualise régulièrement les informations à présenter.

L'invention sera mieux comprise à l'aide de la description suivante de deux formes de réalisation préférées de réalisation du système de présentation d'informations de l'invention, en référence au dessin annexé sur lequel :
- la figure 1 est un schéma par blocs fonctionnels représentant la première forme de réalisation du système, pour un afficheur de mobilier urbain,
- la figure 2 est un schéma par bloc fonctionnels représentant la deuxième forme de réalisation du système, pour un téléviseur, et
- la figure 3 est un schéma par blocs illustrant plus en détails le système de la figure 2.

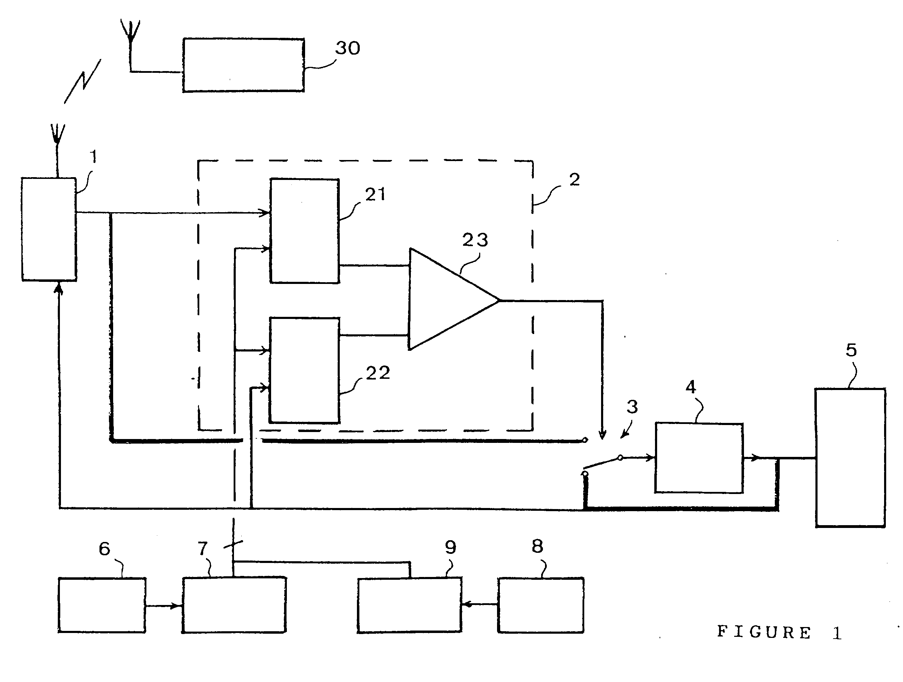

Le système représenté sur la figure 1 comporte en tête un circuit récepteur 1, ici radio et émetteur/récepteur, qui reçoit un flux d'informations d'un centre de diffusion 30. Le circuit récepteur 1 est relié en sortie, à travers une mémoire tampon d'informations non représentée, à un bloc de calcul ou traitement 2 qui sélectionne des informations reçues pour les afficher sur un afficheur 5 de mobilier urbain. Cette sélection s'effectue d'après des données ou paramètres de pertinence ou contexte indiqués plus loin. Le bloc de traitement 2 commande à cet effet un aiguilleur ou multiplexeur 3 à deux voies relié en sortie à l'afficheur 5 à travers un circuit mémoire tampon 4 de présentation d'images, commandant l'afficheur 5. Il s'agit d'images fixes, qui sont mémorisés dans le circuit mémoire 4 pour la durée de leur présentation.

La sortie du circuit radio 1 est reliée à une première entrée de l'aiguilleur 3 et à une première entrée de premiers circuits de calcul de pertinence 21, du bloc 2, dont une sortie commande une première entrée d'un comparateur 23 commandant l'aiguilleur 3. La sortie du circuit mémoire 4 est aussi reliée à une seconde entrée de l'aiguilleur 3 et à une première entrée de seconds circuits de calcul de pertinence 22 du bloc 2, semblables aux circuits 21, commandant une seconde entrée du comparateur 23.

Dans cet exemple, la sortie du circuit mémoire 4 est reliée au circuit radio 1 pour émettre des informations vers le centre de gestion 30.

Les circuits de calcul de pertinence 21, 22 comportent chacun une seconde entrée commandée par des circuits capteurs 6 à 9 de fourniture des paramètres ou données de pertinence ou contexte servant à déterminer la pertinence des informations reçues.

Dans cet exemple, il s'agit d'un récepteur GPS 6 fournissant la position géographique du système et de l'afficheur 5, dont il est solidaire, à travers un circuit 7 de mise en forme et transmission des signaux GPS décodés. La référence 8 indique des capteurs de grandeurs physiques qui dépendent en particulier de la position géographique du système, par exemple de température, d'hygrométrie et de luminosité, reliés aux secondes entrées des circuits 21 et 22 à travers un circuit 9 contenant des paramètres locaux.

Le fonctionnement des circuits de la figure 1 est le suivant.

Le centre de diffusion 30 diffuse le flux d'informations, ici des données d'images fixes de publicité, à chaque image étant associées des données de contexte, indiquant par exemple la position géographique du magasin de l'annonceur ou encore le type de produit sur lequel porte la publicité.

Les données de contexte ainsi reçues sont comparées, dans les premiers circuits de calcul 21, aux données ou paramètres de contexte local des circuits 6 à 9, pour déterminer, dans cet exemple, un écart entre la position GPS de l'afficheur 5 et la position du magasin. Les circuits 6 à 9 capteurs de données de contexte local commandent ainsi le bloc de traitement 2.

A une image à afficher d'un produit pour bronzer, par exemple, sont en outre associées des données ou paramètres de contexte comportant des valeurs élevées de température et de luminosité, dont l'écart avec les valeurs locales des capteurs 8 est de même calculé.

Les circuits de calcul 21 pondèrent ensuite les écarts des trois paramètres ci-dessus pour fournir une valeur globale de pertinence de l'image reçue considérée, une faible valeur (écarts faibles) indiquant ici un haut niveau de pertinence.

Les circuits de calcul 22 effectuent le même genre de calculs pour une image déjà affichée et donc présente en mémoire 4 et fournissent de même une valeur globale de pertinence. En l'absence d'image déjà affichée, les circuits de calcul 22 fournissent au comparateur 23 une valeur maximale, d'absence de pertinence.

Le comparateur 23 recevant les deux valeurs globales de pertinence des circuits de calcul 21 et 22, détermine alors celle des deux images correspondantes, déjà affichée et venant d'être reçue, dont les données de contexte présentent le plus faible écart, ou distance logique, avec les données de contexte local. Le comparateur 23 commande ainsi l'aiguilleur 3 pour conserver l'image en mémoire 4 si c'est elle qui présente la plus grande pertinence et, sinon, pour aiguiller la sortie de la mémoire tampon du circuit radio 1 sur l'entrée de la mémoire 4 afin de substituer, dans celle-ci, la nouvelle image reçue à celle qui était affichée. Le circuit radio 1 émet alors en retour, vers le centre 30, les nouvelles données en sortie de la mémoire 4 pour identifier l'image affichée et ainsi permettre au centre 30 de connaître l'état des divers afficheurs 5 qu'il gère. Des circuits séquenceurs de base de temps, commandant les divers circuits, n'ont pas été représentés, dans un but de clarté. Les circuits de base de temps ci-dessus comportent en outre ici un calendrier automatique ou perpétuel, pour, tout comme les capteurs 8, commander le bloc de traitement 2 par des données représentant les conditions de température et autres, estimées d'après la date actuelle.

La mémoire tampon du circuit radio 1 permet de stocker une ou plusieurs images et évite la nécessité d'une analyse "au vol" des données de contexte reçues. Cette analyse peut ainsi n'intervenir que cycliquement, le bloc de traitement 2 calculant régulièrement les écarts de pertinence entre les données des informations reçues et les données évolutives de contexte local, telles que température et luminosité, et ne considèrent que les écarts minimaux pour présenter, à travers la mémoire 4, les informations d'image correspondantes. En particulier, les circuits de calcul 21 peuvent effectuer à chaque cycle une sélection entre plusieurs images pour ne sélectionner que la plus pertinente.

En variante, le système représenté est mobile, installé dans un autobus, et le récepteur GPS 6 commande la sélection d'une suite d'images- de publicité à afficher, chacune associée à des paramètres de contexte spécifiant une position géographique d'un magasin spécifique. La publicité de chaque magasin est ainsi sélectionnée et affichée lorsque l'autobus passe à proximité de celui-ci.

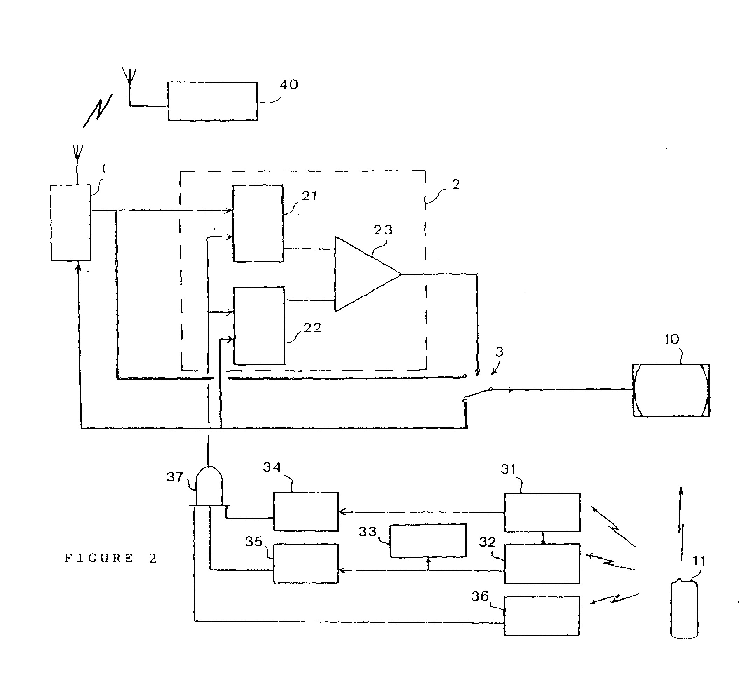

Le schéma de la figure 2 concerne un téléviseur et reprend les éléments 1, 2, 3 de la figure 1 avec leurs fonctions et relations fonctionnelles qu'il est inutile de rappeler ici, la référence 10 indiquant l'écran du téléviseur. Comme il s'agit ici d'images vidéo, temps réel, l'aiguilleur 3 commande directement l'écran 10, sans le circuit mémoire 4. Le circuit radio 1 reçoit les programmes d'un émetteur de canaux de télévision 40. Le bloc de traitement 2 reçoit, par les secondes entrées des circuits de calcul 21, 22, des paramètres de contexte provenant d'un module ou boîtier 11 de télécommande par infrarouge du téléviseur, à travers des circuits 31 à 37 d'élaboration de contexte local depuis le boîtier 11. D'une façon générale, les circuits 31 à 37 déterminent un modèle des préférences du téléspectateur considéré d'après les choix de programmes qu'il effectue, pour informer et donc commander le bloc de traitement 2 afin qu'il commande lui-même automatiquement l'affichage du programme diffusé, parmi ceux reçus simultanément, correspondant le mieux aux préférences ci-dessus.

Le circuit 31 détecte les émissions du boîtier de télécommande 11, les enregistre et en détermine des fréquences ou taux de sélection des programmes en fonction des familles de programmes, c'est-à-dire établit un histogramme. Par familles de programme, on entend le genre de sujet traité : sport, musique, informations d'actualité et autres. Dans cet exemple, l'émetteur 40 émet, avec chaque programme, des informations spécifiant la famille à laquelle il appartient. Le circuit 31 est aussi relié en sortie du circuit radio 1, par une liaison non représentée, et en reçoit les données spécifiant la famille de chaque programme. A chaque réception de télécommande de passage à un autre canal ou chaîne TV, le circuit 31 détermine la famille du programme de cette chaîne d'après le numéro de canal et alimente en telles données, relatives au nouveau programme, un circuit 32 fournissant une liste préférentielle de familles, ainsi établie d'après les télécommandes et ici affichée sur un afficheur 33. Le circuit 32 effectue une mise à jour cyclique de cette liste quand il détecte une émission du boîtier 11. Le circuit 31 alimente de même un circuit 34 d'estimation de la suffisance du nombre de télécommandes enregistrées dans le circuit 31, circuit 34 déterminant si la liste préférentielle du circuit 32 présente un niveau de fiabilité ou confiance suffisant. C'est le cas si le nombre de télécommandes dépasse un seuil, c'est-à-dire que l'échantillonnage des choix ainsi effectué représente bien les goûts ou préférences du téléspectateur.

Le circuit 32 fournit sa liste préférentielle à un circuit 35 de détermination du programme préféré commandant une première entrée d'un circuit ET 37 à trois entrées, dont la deuxième entrée est commandée par le circuit 34 et dont la troisième entrée est commandée par un circuit 36 détecteur de commandes de mode automatique de choix de canal, provenant du boîtier de télécommande 11. En l'absence d'une telle commande, le mode automatique est inhibé et seul le boîtier de télécommande 11 permet alors, de façon classique, de choisir une chaîne. Le circuit 31 continue cependant à recevoir les données de sélection et à tenir à jour la liste préférentielle.

L'utilisateur du boîtier de télécommande 11 alimente ainsi en données statistiques le circuit 31, si bien que les circuits 31 à 37 de contexte local commandent ainsi, en mode automatique, le bloc de traitement 2, selon le même principe que celui exposé pour l'exemple de la figure 1.

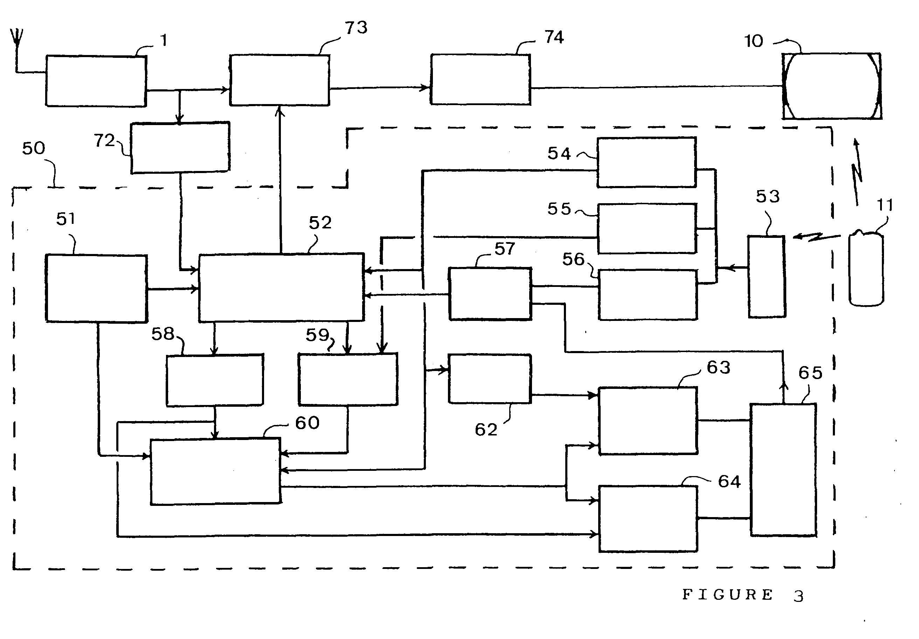

La figure 3 représente de façon plus détaillée les circuits de la figure 2. Elle représente une unité centrale à microprocesseur 50, limitée par un cadre en ligne en pointillés, de commande d'un aiguilleur 73 reliant le circuit radio 1 à des circuits 74 de présentation de signaux d'images vidéo, commandant l'écran 10. Le circuit radio 1 est aussi relié en sortie à un circuit 72 de démodulation de paramètres descripteurs des programmes en cours de réception, c'est-à-dire de données ou paramètres indiquant leur famille.

L'unité centrale à microprocesseur 50 comporte une base de temps 51 et un bloc de calcul 52 comportant un logiciel de sélection des chaînes et donc des programmes de télévision. Un circuit 53, récepteur des télécommandes du boîtier 11, alimente en données correspondantes des circuits 54, 55 et 56. Le circuit 54, qui enregistre des choix de sélection de programmes de télévision et plus précisément des codes d'identification de chaînes de télévision, détermine la correspondance entre les chaînes de diffusion de programmes et le numéro de canal du téléviseur, émis par le boîtier de télécommande 11, et fournit l'information correspondante à un circuit mémoire 62, mémorisant la référence de la chaîne et les paramètres et descripteurs du programme sélectionné, courant. Le bloc de calcul 52 reçoit la même information.

Ce dernier remplit une table 58 comportant des références des chaînes de télévision reçues par le récepteur 1 avec, à chaque fois, une référence de programme et les paramètres descripteurs du programme fournis par le circuit démodulateur 72. La table 58 sert à constituer une table d'histogramme 60 des choix effectués par le téléspectateur, la base de temps 51 fournissant la valeur de l'instant courant lors de l'actionnement du boîtier de télécommande 11, pour pondérer chaque choix de programme par la durée pendant laquelle ce choix a été maintenu. Le circuit 54 est aussi relié par sa sortie à la table d'histogramme 60 pour commander la prise en compte de la durée ci-dessus de chaque choix de programme, c'est-à-dire pour mémoriser l'heure de fin de sélection du programme et en même temps l'heure de début du nouveau programme sélectionné, lorsque le boîtier de télécommande 11 commande le saut à un tel nouveau programme. Le téléspectateur peut aussi, par le circuit 55 de choix de programme de télévision, forcer des choix fictifs dans la table d'histogramme 60 à travers une table 59 reliée au bloc de calcul 52, c'est-à-dire désigner des programmes ou des sujets l'intéressant, futurs ou relatifs à une chaîne autre que celle en cours de visualisation, cette désignation s'affranchissant de toute notion d'affichage sur l'écran 10.

Des circuits de traitement 63, 64 et 65, homologues du bloc de traitement 2, ont pour fonction de sélectionner le "meilleur" programme en cours de diffusion, compte tenu des préférences du téléspectateur. Les circuits 63, homologues des circuits 22, sont reliés en entrée à la sortie du circuit mémoire 62 et à celle de la table d'histogramme 60, pour déterminer le rang du programme de la chaîne visionnée, ou programme courant, dans l'histogramme qui forme un modèle de référence. Les circuits 64, reliés à la sortie de la table 58, déterminent de même les rangs des divers programmes reçus, dans cet histogramme. L'histogramme représente des taux de sélection de programmes de télévision en fonction des sujets ou familles des programmes et commande la sélection, par le comparateur 65, d'un nouveau programme d'après l'histogramme. Les circuits 63 et 64 fournissent le ou les rangs ainsi calculés au circuit comparateur 65, qui commande en conséquence un circuit 57 de commande d'incrustation ou affichage à l'écran 10, relié en sortie au bloc de calcul 52. Le circuit 57 est aussi commandé par le circuit 56, de réglage d'incrustation d'écran.

Le bloc de calcul 52 commande l'aiguilleur 73 d'après les commandes ou informations provenant du circuit 57, afin de sélectionner la chaîne diffusant le programme présentant la plus grande pertinence, donc de rang le plus élevé dans l'histogramme. Les circuits 74 de présentation d'informations comportent dans cet exemple un décodeur numérique MPEG commandant un convertisseur vidéo numérique/analogique fournissant trois signaux de chrominance appliqués à l'écran 10. Il peut aussi être prévu une liaison analogique PAL/SECAM ou NTSC, entre le récepteur 1 et l'écran 10, avec un multiplexeur (73) de choix de canal.

Une table des programmes pour le jour courant et les jours suivants peut être prévue, pour remplacer le démodulateur 72 dans le cas où les programmes seraient diffusés sans leurs données de descripteur de famille. Le bloc de calcul 52 peut alors, d'après l'heure de la base de temps 51, déterminer les descripteurs des programmes en cours et choisir celui qui convient le mieux.

## Revendications

1. Système de présentation d'informations, comportant des moyens (1) de réception d'un flux d'informations et des moyens (3, 4, 74) de présentation de ces informations, caractérisé par le fait qu'il comporte, reliant les moyens de réception (1) aux moyens de présentation (3, 4, 74), des moyens (2, 52, 57, 63, 64, 65) de sélection d'informations agencés pour comparer des données de contexte liées aux informations reçues à des données de contexte local et pour transmettre, aux moyens de présentation (3, 4, 74), des informations dont les données de contexte présentent le plus faible écart avec les données de contexte local.

2. Système selon la revendication 1, dans lequel les moyens de sélection (2, 52, 57, 63 - 65) sont agencés pour calculer régulièrement les écarts de pertinence entre les données des informations reçues et les données évolutives de contexte local, ne considérer que les écarts minimaux et présenter des informations correspondantes.

3. Système selon l'une des revendications 1 et 2, comportant des capteurs (6 - 9, 31, 54 - 56, 58 - 60) de données de contexte local commandant les moyens de sélection (2, 52, 57, 63- 65).

4. Système selon la revendication 3, dans lequel les capteurs (31, 54 - 56, 58 - 60) sont des enregistreurs de choix de sélection de programmes de télévision.

5. Système selon la revendication 4, dans lequel les enregistreurs (54) enregistrent des codes d'identification de chaînes de télévision.

6. Système selon la revendication 5, dans lequel les capteurs (31, 60) sont agencés pour engendrer un histogramme représentant des taux de sélection de programmes de télévision en fonction des sujets des programmes et pour commander la sélection d'un nouveau programme d'après l'histogramme.

7. Système selon la revendication 3, dans lequel les capteurs sont des capteurs (6) de position géographique du système.
